# EUROPÄISCHE PATENTSCHRIFT

(11) **EP 1 074 150 B1**
(45) Veröffentlichungstag und Bekanntmachung des Hinweises auf die Patenterteilung: **04.12.2002**
(21) Anmeldenummer: 98928247.0
(22) Anmeldetag: 12.05.1998
(51) Int. Cl.: H04Q 3/00

(54) **SIGNALISIERUNGSEINRICHTUNG IN EINEM SIGNALISIERUNGSSYSTEM**
SIGNALLING DEVICE IN A SIGNALLING SYSTEM
DISPOSITIF DE SIGNALISATION DANS UN SYSTEME DE SIGNALISATION

(30) Priorität: 22.04.1998 DE 98107336
(43) Veröffentlichungstag der Anmeldung: 07.02.2001
(73) Patentinhaber: SIEMENS AKTIENGESELLSCHAFT, 80333 München (DE)
(72) Erfinder: GRADISCHNIG, Klaus, D-82131 Gauting (DE)
(86) Internationale Anmeldenummer: EP9802775
(87) Internationale Veröffentlichungsnummer: WO99055098

(56) Entgegenhaltungen:
- EP-A- 0 203 614
- WO-A-96/16515
- WO-A-96/21309
- WO-A-97/11563
- US-A- 4 745 593
- US-A- 5 029 165
- GLITHO R H: "THE STANDARDS ASPECTS OF SS7 NETWORK MANAGEMENT" JOURNAL OF NETWORK AND SYSTEMS MANAGEMENT, Bd. 2, Nr. 3, 1. September 1994, Seiten 233-256, XP000574573

## Beschreibung

Bei kanalbezogenen Zeichengabesystemen, z.B. im Zeichengabesystem R5, ist es möglich, daß ein Zeichengabepunkt über eine Nutzkanalschleife mit sich selbst kommuniziert bzw. eine Verbindung aufbaut. In dem Zeichengabesystem ZGS7 ist dies nicht möglich (siehe weiter unten). Solche Schleifen sind jedoch für das Lösen von mehreren Problemen von Vorteil. Für das Interworking von unterschiedlichen Zeichengabesystemen (Signalisierungs-Systemen) ist es eine wesentliche Vereinfachung bei der Realisierung, wenn alle Zeichengabesysteme mit einem ausgezeichneten Zeichengabesystem interworken, und nicht jedes mit jedem. Des weiteren sind solche Schleifen von Vorteil, um Anlagen mit großem Verkehr testen zu können. Schließlich können an solche Schleifen Monitore angebracht werden. Unterschiedliche Verkehrsströme können dann durch rein administrative Maßnahmen (ohne Hardwareumrangierung) einer Beobachtung zugeführt werden.

Im ZGS7 wird ein Zeichengabepunkt durch eine Adresse, den sogenannten Signallingpointcode identifiziert. Die Ebene 3 des Nachrichtentransferteils kann keine Nachricht an den eigenen Signallingpointcode absenden bzw. keine Nachricht von sich selbst empfangen. Auch gewisse Anwender des Nachrichtentransferteils, z.B. TUP und ISUP, könnten normalerweise keine kanalbezogenen Nachrichten an sich selbst senden, selbst wenn dies der Nachrichtentransferteil ermöglichen würde. Um solche Schleifen dennoch zu ermöglichen, sind spezielle Verfahren implementiert worden, die im wesentlichen darin bestehen, daß spezielle Zeichengabekanäle Schleifen bilden, auf denen Ziel- und/oder Absenderadresse invertiert/komplementiert werden. Für Anwender müssen ggf. ähnliche, anwenderspezifische Modifikationen durchgeführt werden.

Der Erfindung liegt die Aufgabe zugrunde, Schleifenbildung ohne die genannten Nachteile zu ermöglichen.

Diese Aufgabe wird durch ein Signalisierungseinrichtung gemäß Anspruch 1 bzw. ein Verfahren zur Signalisierung gemäß Anspruch 6 gelöst.

Im folgenden wird die Erfindung mithilfe der Zeichnung näher erläutert, wobei die Zeichnung sechs Figuren umfaßt.

Im ZGS7 wird ein Netzwerk durch einen sogenannten Network Indicator (NI), welcher in den Nachrichten enthalten ist, gekennzeichnet. Dies ist z.B. aus Dokument EP-A-0 203 614 bekannt. Für den NI sind in den Nachrichten 2 Bit reserviert, es können also bis zu 4 Netzwerke in einem Knoten unterschieden werden (bei den genannten Netzwerken kann es sich z.B. um die Signalisierungsnetze von Kommunikationsnetzen unterschiedlicher Betreiber oder unterschiedlicher Technologie (z.B. Breiband oder Schmalband) sowie um nationale bzw. Internationale Signalisierungsnetzwerke handeln). Da normalerweise ein Signalisierungslink nur einem Netzwerk angehört, hat sich jedoch die Erkenntnis durchgesetzt, daß es zur Unterscheidung des Netzwerkes genügt, einzelne Links bestimmten Netzwerken zuzuordnen. Der NI wird also nicht mehr als Unterscheidungsmerkmal benötigt.

In der Tat gibt es Kommunikations-Systeme, z.B. das System EWSD der Siemens AG oder es sind solche in Planung, die mehr als vier (z.B. 8 oder 32) Signalisierungsnetzwerke unterstützen. Dabei wird jedem Signalisierungslink intern eine Netzwerkidentität und jeder internen Netzwerkidentität extern ein NI zugeordnet. Dabei können Netzwerke mit unterschiedlicher interner Identität durchaus denselben externen NI benutzen. Jedes (interne) Netzwerk ist dabei vollkommen von den anderen Netzwerken getrennt.

Dieses Konzept, das sogenannte Multiple-Network-Konzept, wird nun dafür verwendet, in ZGS7 Schleifen zu betreiben, ohne daß es einer Zusatzentwicklung bedarf. Das Signalisierungs-System in einem Signalisierungspunkt wird in zwei (internen) Netzwerken durch unterschiedliche Pointcodes identifiziert. Diese beiden Netzwerke können dann durch Signalisierungslinks ohne Probleme miteinander verbunden werden. Wird in dem System bzw. in zumindest einem der beiden miteinander zu verbindenden Netzwerke eine Überprüfung des ankommenden NI auf Richtigkeit durchgeführt, dann muß den beiden internen Netzwerken auch derselbe externe NI zugeordnet werden. Anmerkung: Wenn es kein Mapping von Incoming Linkset auf NI gibt und unterschiedliche Netze von eine einzigen, gemeinsamen Netzinstanz (Protokollrealisierung) kontrolliert werden, muß der NI dazu hergenommen werden, das "zuständige" Netzwerk (die zuständige Routingtabelle) zu identifizieren. Dabei ist es ohne Überprüfung z.B. möglich, daß eine Nachricht von einem Netz durch Verwendung eines falschen NI verbotenerweise in ein anderes Netz weitergeleitet wird, was zu nachteiligem Verhalten in dem anderen Netz führen kann (man könnte da von *unkontrolliertem* Tunneln sprechen, da es von extern angestoßen wird und nicht mehr in dem Knoten kontrolliert werden kann).

Die genannte Anordnung wird im weiteren als Netzwerk- bzw. Signalisierungstunnel bezeichnet. Im folgenden werden Ausführungsformen der Erfindung näher erläutert.

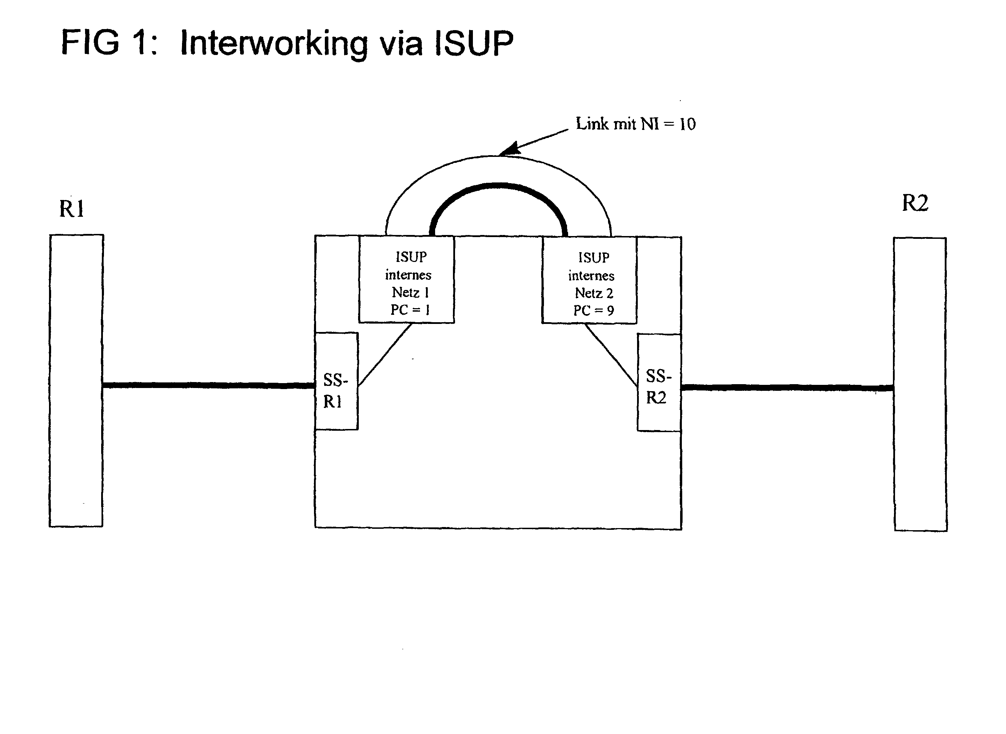

FIG 1 zeigt eine Ausführung der Erfindung für das Interworking in einem Signalisierungspunkt.

Sowohl im internen Netz 1 als auch 2 befindet sich ein ISUP. Extern verwenden beide Netze denselben NI, aber unterschiedliche Pointcodes. Ein Ruf zwischen R1 und R2 wird über die ISUP-Schleife geleitet. Dazu genügt es, die ZGS7 Routingtabellen in beiden Netzen sowie die Routingtabellen für das Callprozessing (bei ISUP, R1 und R2) entsprechend einzurichten und die nötigen Trunks und Signalisierungstunnel für die ISUP-Schleife zu bewerkstelligen.

Zwischen CCITT-Signalisierungs-System R1 und ISUP sowie zwischen CCITT-Signalisierungs-System R2 und ISUP ist ein Interworking realisiert, nicht aber zwischen R1 und R2. Ein Anruf, der von R1 nach R2 laufen soll, wird vom Call-Processing zunächst abgehend an den ISUP weitergegeben, welcher die zu diesem Verbindunsaufbau gehörenden MSU über den Signalisierungs-Tunnel an den ISUP des anderen Netzes routet . Der Anruf wird also von R1 kommend zunächst an den ISUP in Netz 1 weitergegeben. Der ISUP ermittelt aus der durch R1 signalisierten "called party adress" das nächste Ziel mit dem dazugehörenden DPC (DPC=9), trägt diesen DPC in die MSUs ein und übergibt diese MSUs dann an den MTP von ZGS7. Der MTP entnimmt den MSUs den DPC und ermittelt daraus anhand seiner Routing-Tabelle für Netz 1 den Link (einen Schleifen-Link), über den er die MSU weiterroutet. Der ISUP in Netz 2 empfängt die MSUs vom MTP und übergibt die MSUs, und damit den Anruf, wiederum dem Call-Processing. Das Call-Processing ermittelt nun anhand seiner Routing-Tabelle, daß der Ruf über R2 weitergeleitet wird.

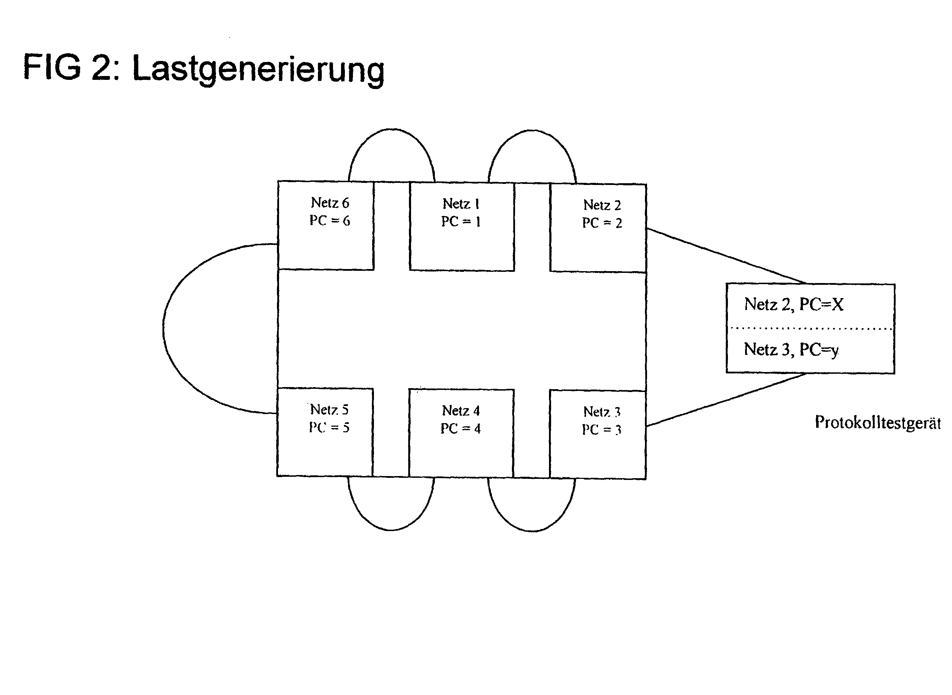

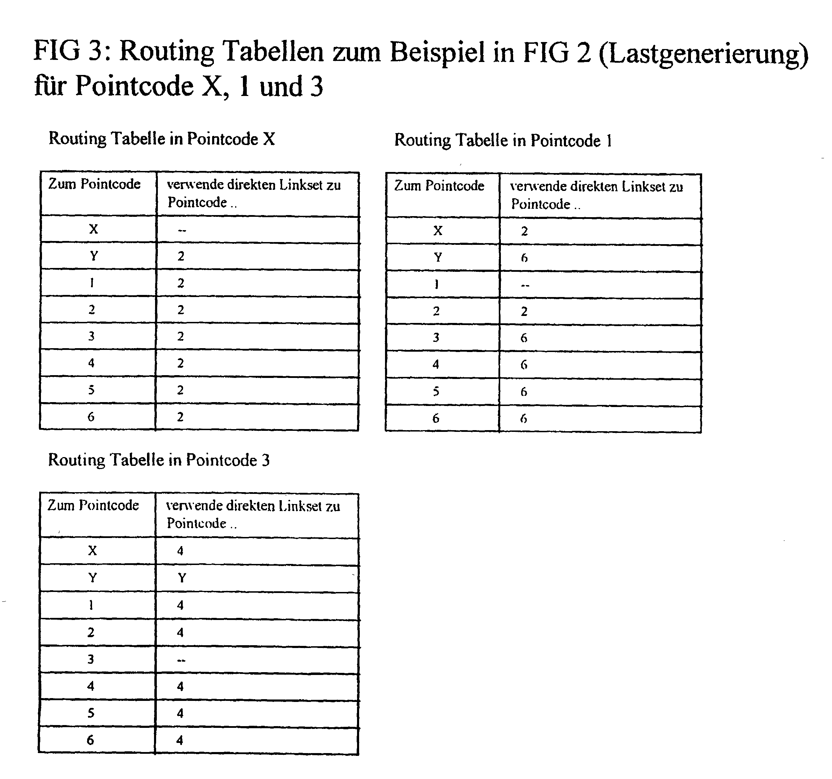

FIG 2 zeigt eine Ausführung der Erfindung für die Lastgenerierung.
FIG 3 zeigt zu der Ausführung in FIG 2 gehörige Routingtabellen in den Pointcodes X, 1 und 3, d.h. in den unterschiedlichen, vom System unterstützten Netzwerken des Signalisierungspunkts.

Im System werden z.B. 6 Netze eingerichtet und zyklisch miteinander durch Netzwerktunnel verbunden. Zwei Netze (hier Netz 2 und 3) werden auch mit einem Protokolltestgerät verbunden, welches in jedem der beiden Netze einen Pointcode (hier X und Y) emuliert. Alle Netze verwenden denselben **NI**. Die Routingtabellen in den Netzen im System werden so eingerichtet, daß Netz 3 MSUs, die einen Ziel-Pointcode PC=X beinhalten, zu Netz 4 routet, und Netz 4 sie weiter zu Netz 5, etc. routet. Für PC=Y werden die Routingtabellen analog in umgekehrter Richtung eingerichtet. Damit wird eine vom Testgerät generierte Nachricht sechsmal durch das System geroutet, wodurch mit relativ einfachen Testgeräten große Systemlasten erzeugt werden können. Weitere Varianten dieser Anwendung sind der Einbezug der Anwender (z.B. ISUP) oder aber vollkommen geschlossene Schleifen, in denen MSUs konstant kreisen.

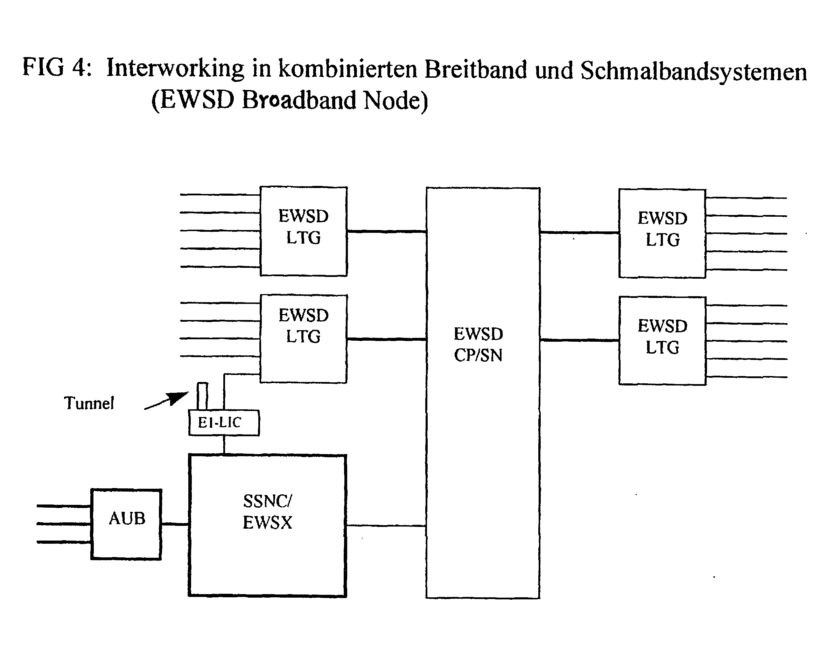

FIG 4 zeigt eine Ausführung der Erfindung für das Interworking in kombinierten Breitband und Schmalbandsystemen.

Der SSNC ist die gemeinsame MTP Platform im EWSD Broadbandnode. B-ISUP befindet sich nur im EWSX Teil, N-ISUP im EWSD und EWSX. Um im EWSD Broadbandnode ein NNI- (Trunk-) Interworking zw. Breitband und Schmalband ohne Zusatzentwicklung zu ermöglichen, kann das Interworking zwischen N-ISUP im EWSD und N-ISUP im System EWSX durch den beschriebenen Signalisierungstunnel erzielt werden.

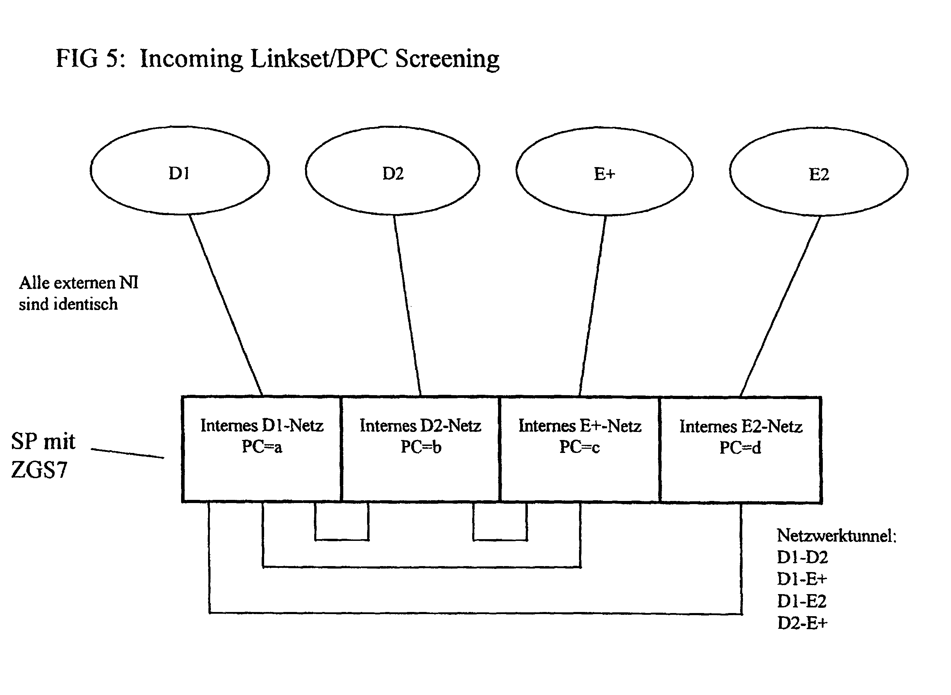

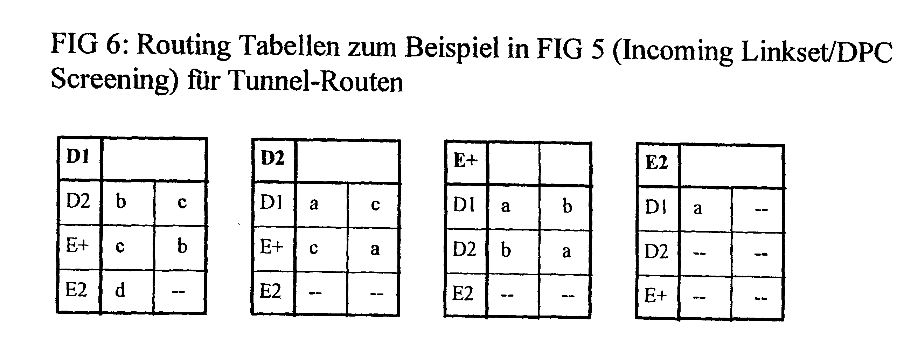

FIG 5 zeigt eine Ausführung der Erfindung, bei der ein Betreiber (z.B. D1) mehreren anderen Netzbetreibern (z.B. D2, E+, E2) Internetwork-STP Dienste anbietet. Dieses Ausführungsbeispiel kann für gewisse praktisch relevante Ausprägungen des Incoming Linkset/DPC Screening (siehe Q.706, §8) verwendet werden.

Dabei soll D1 mit allen anderen Netzen, D2 mit D1 und E+, E+ mit D1 und D2, und E2 nur mit D1 interworken können. Diese Funktion kann mit mehreren, durch Tunnel verbundene interne Netzwerke gelöst werden. Dabei wird den Links zu jeweils einem Netzbetreiber ein eigenes internes Netz zugeordnet. Entsprechend der zugelassenen Signalisierungsbeziehungen werden die einzelnen Netze durch Tunnel verbunden. Die Routingtabellen in den einzelnen Netzen werden den erlaubten Beziehungen gemäß eingerichtet.

Alternativ kann der Verkehr zwischen den Netzen auch über ein internes Übergangsnetz geleitet werden (siehe Beispiel aus FIG 1). Dies hat den Vorteil, daß ggf. weniger Tunnel benötigt werden. Andererseits muß dann Verkehr zwischen den Netzen durch zwei Tunnel. In dieser Ausführung ist es dabei wahrscheinlich, daß den internen Netzen ein gemeinsamer externer Adressraum zugrunde liegt, d.h., daß es extern tatsächlich nur ein Netz gibt. In unserem Beispiel wäre dieses Netz der sogenannte Netzübergang. Von außen gesehen erscheinen die unterschiedlichen internen Netze als separate, untereinander nach den Vorgaben verbundene STP.

FIG 6 zeigt zu der Ausführung in FIG 5 gehörige Routingtabellen.

Diese Routingtabellen in den vier logischen internen Netzwerken des Signalisierungspunkts zeigen erlaubte Primärund ggf. Sekundärwege zu den jeweils anderen Netzwerken, wobei diese Wege durch den jeweils nächsten Pointcode identifiziert werden. Dabei steht z.B. in der ersten Tabelle die mit D2 markierte Reihe symbolhaft für alle Ziele (Pointcodes) in D2, welche von D1 aus angesteuert werden dürfen. Als Primärweg wird dabei der direkte Link(set) zum PC=b genommen. Sollte dieser Link(set) ausgefallen sein, kann als Sekundärweg der Weg über PC=c genommen werden, da von dort aus auch ein Weg zu D2 vorhanden ist. Die "externen" Routen, z.B. von PC=a in das D1 Netz, sind hier nicht aufgeführt da nicht relevant.

Die erläuterten Ausführungsformen der Erfindung haben gezeigt, daß ein existierender Mechanismus ("multiple networks") durch die erfindungsgemäße Konfiguration ohne zusätzlichen Aufwand zur Realisierung einer Reihe von Anwendungen verwendet werden kann.

## Patentansprüche

1. Signalisierungseinrichtung im Signalisierungssystem Nr.7 zur Bearbeitung von Signalisierungsnachrichten, mit
- Links, über die die Signalisierungseinrichtung mit anderen Signalisierungseinrichtungen verbunden ist,
- mindestens einem Signalisierungs-System, das über die genannten Links Signalisierungsnachrichten zu anderen Signalisierungseinrichtungen sendet bzw. von diesen empfängt,
**gekennzeichnet durch**
- ein Signalisierungs-System, das einem Link jeweils eine Signalisierungsnetzwerk-Identität zuordnet,
- mindestens einen Link, der in einer Schleife von der Signalisierungseinrichtung zu derselben Signalisierungseinrichtung zurückgeführt ist, einem sogenannten Schleifen-Link, wobei das Signalisierungs-System dem Schleifen-Link aus- und eingangsseitig unterschiedliche Signalisierungsnetzwerk-Identitäten zuordnet.

2. Signalisierungseinrichtung nach Anspruch 1,
**dadurch gekennzeichnet, daß**
das genannte Signalisierungs-System mithilfe eines genannten Schleifen-Links Signalisierungsnachrichten zwischen zwei weiteren in der Signalisierungseinrichtung enthaltenen Signalisierungs-Systemen, zu denen es jeweils eine Schnittstelle aufweist, vermittelt.

3. Signalisierungseinrichtung nach Anspruch 1,
**dadurch gekennzeichnet, daß**
das genannte Signalisierungs-System mithilfe mindestens eines genannten Schleifen-Links zu Testzwecken interne Last generiert.

4. Signalisierungseinrichtung nach Anspruch 1,
**dadurch gekennzeichnet, daß**
das genannte Signalisierungs-System mithilfe eines genannten Schleifen-Links ein Internetworking mit anderen Netzen realisiert.

5. Signalisierungseinrichtung nach einem der Ansprüche 1 bis 4,
**dadurch gekennzeichnet, daß**
das genannte Signalisierungs-System ein Signalisierungs-System gemäß Nr. 7 ist und dem genannten Schleifen-Link ausund eingangsseitig der gleiche Network Indicator (NI) zugeordnet ist.

6. Verfahren zur Signalisierung in einer Signalisierungseinrichtung des Signalisierungssystems Nr.7, demgemäß
- Links der Signalisierungseinrichtung von einem Signalisierungs-System der Signalisierungseinrichtung Signalisierungsnetzwerk-Identitäten zugeordnet werden,
- einem Link, dem sogenannten Schleifen-Link, der von der Signalisierungseinrichtung in einer Schleife zu derselben Signalisierungseinrichtung zurückgeführt ist, von dem Signalisierungs-System aus- und eingangsseitig unterschiedliche Signalisierungsnetzwerk-Identitäten zugeordnet werden.

7. Verfahren nach Anspruch 6,
**dadurch gekennzeichnet, daß**
ein genannter Schleifen-Link von dem genannten Signalisierungs-System verwendet wird, um Signalisierungsnachrichten zwischen zwei weiteren Signalisierungs-Systemen der Signalisierungseinrichtung, zu denen es jeweils eine Schnittstelle aufweist, zu vermitteln.

8. Verfahren nach Anspruch 6,
**dadurch gekennzeichnet, daß**
ein genannter Schleifen-Link von dem genannten Signalisierungs-System verwendet wird, um zu Testzwecken Last zu generieren.

9. Verfahren nach Anspruch 6,
**dadurch gekennzeichnet, daß**
ein genannter Schleifen-Link von dem genannten Signalisierungs-System verwendet wird, um einem Netz ein erwünschtes Internetworking mit anderen Netzen zu ermöglichen.

10. Verfahren nach einem der Ansprüche 6 bis 9,
**dadurch gekennzeichnet, daß**
einem genannten Schleifen-Link von dem genannten Signalisierungs-System aus- und eingangsseitig ein gemeinsamer Network Indicator (NI) zugeordnet wird.

## Claims

1. Signalling device in Signalling System No. 7 for handling signalling messages, having
- links which connect the signalling device to other signalling devices,
- at least one signalling system which uses said links to send and receive signalling messages to and from other signalling devices,
**characterized by**
- a signalling system which assigns a respective signalling network identity to a link,
- at least one link which is fed back in a loop from the signalling device to the same signalling device, a "loop link", with the signalling system assigning different signalling network identities to the output side and the input side of the loop link.

2. Signalling device according to Claim 1,
**characterized in that**
said signalling system uses an aforementioned loop link to switch signalling messages between two further signalling systems which are contained in the signalling device and for which it has a respective interface.

3. Signalling device according to Claim 1,
**characterized in that**
said signalling system uses at least one aforementioned loop link to generate internal load for test purposes.

4. Signalling device according to Claim 1,
**characterized in that**
said signalling system uses an aforementioned loop link to implement Internet working with other networks.

5. Signalling device according to one of Claims 1 to 4,
**characterized in that**
said signalling system is a signalling system based on No. 7, and the output side and the input side of said loop link are assigned the same network indicator (NI).

6. Method for signalling in a signalling device in Signalling System No. 7, according to which
- a signalling system in the signalling device assigns signalling network identities to links on the signalling device,
- the signalling system assigns different signalling network identities to the output side and -the input side of a link, the "loop link", which is fed back from the signalling device in a loop to the same signalling device.

7. Method according to Claim 6,
**characterized in that**
said signalling system uses an aforementioned loop link to switch signalling messages between two further signalling systems in the signalling device, for which signalling system it has a respective interface.

8. Method according to Claim 6,
**characterized in that**
said signalling system uses an aforementioned loop link to generate load for test purposes.

9. Method according to Claim 6,
**characterized in that**
said signalling system uses an aforementioned loop link to allow a network to perform desired Internet working with other networks.

10. Method according to one of Claims 6 to 9,
**characterized in that**
said signalling system assigns a shared network indicator (NI) to the output side and the input side of an aforementioned loop link.

## Revendications

1. Dispositif de signalisation dans le système de signalisation n°7, pour le traitement de messages de signalisation, comprenant:
- des liaisons par lesquelles le dispositif de signalisation est relié à d'autres dispositifs de signalisation,
- au moins un système de signalisation qui envoie à d'autres dispositifs de signalisation resp. qui reçoit de ceux-ci des messages de signalisation par lesdites liaisons,
**caractérisé par**
- un système de signalisation qui associe à la liaison à chaque fois un identificateur du réseau de signalisation,
- au moins une liaison qui est renvoyée dans une boucle du dispositif de signalisation vers le même dispositif de signalisation, à savoir une liaison dite en boucle, le système de signalisation associant à l'entrée et à la sortie de la liaison en boucle différents identificateurs de réseaux de signalisation.

2. Dispositif de signalisation selon la revendication 1, **caractérisé en ce que** ledit système de signalisation transmet à l'aide d'une desdites liaisons en boucle des messages de signalisation entre deux autres systèmes de signalisation contenus dans le dispositif de signalisation et vis-à-vis de chacun désquels ils présentent une interface.

3. Dispositif de signalisation selon la revendication 1, **caractérisé en ce que** ledit système de signalisation génère une charge interne dans un but de test au moyen d'au moins l'une desdites liaisons en boucle.

4. Dispositif de signalisation selon la revendication 1, **caractérisé en ce que** ledit système de signalisation réalise un interfonctionnement avec d'autres réseaux au moyen de l'une desdites liaisons en boucle.

5. Dispositif de signalisation selon l'une des revendications 1 à 4, **caractérisé en ce que** ledit système de signalisation est un système de signalisation selon Nr.7, et **en ce que** le même indicateur de réseau (NI) est associé à l'entrée et à la sortie de ladite liaison en boucle.

6. Procédé de signalisation dans un dispositif de signalisation du système de signalisation N°7, dans lequel
- des liaisons du dispositif de signalisation sont associées par un système de signalisation aux identificateurs de réseaux de signalisation du dispositif de signalisation,
- des identificateurs différents pour la sortie et l'entrée du réseau de signalisation sont associés à une liaison, à savoir la liaison dite en boucle, qui est renvoyée par le dispositif de signalisation dans une boucle allant vers le même dispositif de signalisation.

7. Procédé selon la revendication 6, **caractérisé en ce qu'**une desdites liaisons en boucle est utilisée par ledit système de signalisation pour transmettre des messages de signalisation entre deux autres systèmes de signalisation du dispositif de signalisation avec chacun desquels il présente une interface.

8. Procédé selon la revendication 6, **caractérisé en ce que** l'une desdites liaisons en boucle est utilisée par ledit système de signalisation pour créer une charge dans un but de test.

9. Procédé selon la revendication 6, **caractérisé en ce qu'**une desdites liaisons en boucle est utilisée par ledit système de signalisation pour permettre à un réseau un interfonctionnement souhaité avec d'autres réseaux.

10. Procédé selon l'une des revendications 6 à 9, **caractérisé en ce que** ledit système de signalisation associe un indicateur de réseau (NI) commun à l'entrée et à la sortie de l'une desdites liaisons en boucle.
